(19) **Europäisches Patentamt / European Patent Office / Office européen des brevets**

(11) **EP 4 679 766 A1**

(12) **EUROPEAN PATENT APPLICATION**

(43) Date of publication:
**14.01.2026 Bulletin 2026/03**

(21) Application number: **25184343.9**

(22) Date of filing: **21.06.2025**

(51) International Patent Classification (IPC):
**H04L 9/08** *(2006.01)* **H04L 9/32** *(2006.01)*

(52) Cooperative Patent Classification (CPC):
**H04L 9/3273; H04L 9/0825; H04L 9/0891**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.07.2024 IN 202421052518**

(71) Applicant: **Tata Consultancy Services Limited
400 021 Mumbai, Maharashtra (IN)**

(72) Inventors:
• **NELABHOTLA, Narendra Kumar Venkata
500081 Hyderabad, Telangana (IN)**
• **MADDALI, Lakshmi Padmaja
500081 Hyderabad, Telangana (IN)**
• **NARUMANCHI, Harika
500081 Hyderabad, Telangana (IN)**

(74) Representative: **Goddar, Heinz J.
Boehmert & Boehmert
Anwaltspartnerschaft mbB
Pettenkoferstrasse 22
80336 München (DE)**

(54) **EFFICIENT MUTUAL AUTHENTICATION OF SERVER AND CLIENT**

(57)    Password based authentication is one of the common forms of authentication used in practice. However, when a user/client device enrolls with a server using password information, the authentication process exposes hash of password information to the server which is prone to various types of passwords guessing attacks. Present disclosure provides a system and a method that authenticates a user without revealing his/her password information to a third-party identity provider. This is done by using bilinear parings to authenticate user without sending password information to the server and by way generating client shared secret, server secret, public key, private key and the like. This eliminates the need for storing any keys on multiple devices/third parties or storing password information on the server side.

invoking at a client device, a key-pair technique via one or more hardware processors, for selection of a private key for a user ⌇ 202

computing, by using the key-pair technique via the one or more hardware processors, a public key based on the selected private key ⌇ 204

selecting, at the client device, a username for the user ⌇ 206

obtaining, at the client device, an encrypted shared secret generated by a server based on at least one of the username and the computed public key, wherein the shared secret is unique and specific to the user, wherein the encrypted shared secret is indicative of a successful registration of the user at the server, and wherein the shared secret is computed based on a randomly selected server secret ⌇ 208

**FIG. 2**

EP 4 679 766 A1

**Description**

CROSS-REFERENCE TO RELATED APPLICATIONS AND PRIORITY

The present application claims priority to Indian application no. 202421052518, filed on July 09, 2024.

TECHNICAL FIELD

The disclosure herein generally relates to authentication techniques, and, more particularly, to efficient mutual authentication of server and client.

BACKGROUND

Password based authentication is one of the common forms of authentication used in practice. However, when a user/client device enrolls with a server using password information, the authentication process exposes hash of password information to the server which is prone to various types of passwords guessing attacks such as dictionary attacks, credential stuffing, brute-force attacks, password spraying and so on. Hence, this can lead to unauthorized usage of applications using the stolen password.

SUMMARY

Embodiments of the present disclosure present technological improvements as solutions to one or more of the above-mentioned technical problems recognized by the inventors in conventional systems.

For example, in one aspect, there is provided a processor implemented method for efficient mutual authentication of server and client. The method comprises invoking at a client device, a key-pair technique via one or more hardware processors, for selection of a private key for a user; computing, by using the key-pair technique via one or more hardware processors, a public key based on the selected private key; selecting a username for the user; and obtaining, at the client device, an encrypted shared secret generated by a server based on at least one of the username and the computed public key, wherein the shared secret is unique and specific to the user, wherein the encrypted shared secret is indicative of a successful registration of the user at the server, and wherein the shared secret is computed based on a randomly selected server secret.

In an embodiment, the method further comprises transmitting via the client device an authentication request to the server; obtaining at the client device a challenge from the server; transmitting a response by the client device to the server based on the obtained challenge; and obtaining, from the server, an authentication confirmation of the user based on a comparison of the transmitted response with a reference response generated by the server.

In an embodiment, the server is authenticated by obtaining by the server a challenge and the username unique to the user from the client device; retrieving by the server an associated public key pertaining to the username and generating a response thereof; and authenticating the server based on a reference response generated by the client device based on the associated public key and the generated response.

In an embodiment, the method further comprises in an event that the shared secret is forgotten by the user: transmitting, from the client device, the username specific to the user; obtaining, by the client device, a randomly generated and encrypted challenge from the server, wherein the randomly generated and encrypted challenge is based on the computed public key associated with the user; decrypting, by the client device, the randomly generated and encrypted challenge obtained from the server by using the selected private key associated with the user to obtain a decrypted challenge; computing a response to the decrypted challenge and transmitted to the server thereof; and obtaining the encrypted shared secret from the server based on a comparison of the computed response with a reference result computed by the server.

In an embodiment, the method further comprises in an event that the username is forgotten by the user: transmitting, by the client device, an encrypted set of parameters comprising the shared secret and the computed public key associated with the user to the server; wherein the encrypted set of parameters is based on a computed public key associated with the server; and obtaining the username specific to the user based on a comparison of (i) a tuple comprising the shared secret and the computed public key being decrypted by the server, and (ii) an associated authentication database.

In an embodiment, the method further comprises in an event that the selected private key is forgotten by the user: invoking at the client device, the key-pair technique via one or more processors, for randomly selecting a new private key for the user; computing, by the client device, a new public key for the user based on the new selected private key; transmitting, by the client device, an encrypted set of parameters comprising the username, the shared secret, and the new public key to the server; wherein the encrypted set of parameters is based on a computed public key associated with the server; obtaining, from the server, an acknowledgement along with an encrypted shared secret by the client device, wherein the server (a) performs a comparison of (i) the shared secret being decrypted by the server, and (ii) an associated authentication database, (b) updates the public key with the new public key, and (c) outputs the encrypted shared secret based on uniqueness of a pair comprising the new public key and the shared secret.

In an embodiment, the method further comprises in an event that the private key is to be reset by the user: transmitting, by the client device, a reset request pertaining to the private key to the server; obtaining, by the client device, a randomly generated and encrypted challenge from the server in response to the reset request; decrypting, by the client device, the randomly generated and encrypted challenge by using the selected private key pertaining to the user to obtain a decrypted challenge; generating, at the client device, a response to the decrypted challenge; invoking, the key-pair technique comprised in the client device, for selection of a new private key and computing a new public key based on the new private key, wherein the step of invoking is based on a reference result computed by the server and compared with the generated response; generating, by the client device, a result based on the new private key and the new public key; transmitting, by the client device, the generated result, the username, and the new public key to the server; and obtaining, from the server, an acknowledgement along with an encrypted shared secret by the client device, wherein the server (i) computes a reference result and verifies with the generated result, (ii) updates the public key with the new public key, and (iii) outputs the encrypted shared secret based on uniqueness of a pair comprising the new public key and the shared secret.

In another aspect, there is provided a processor implemented system for efficient mutual authentication of server and client. The system serving as a client device comprises a memory storing instructions; one or more communication interfaces; and one or more hardware processors coupled to the memory via the one or more communication interfaces, wherein the one or more hardware processors are configured by the instructions to: invoke at the client device, a key-pair technique, for selection of a private key for a user; compute, by using the key-pair technique, a public key based on the selected private key; select a username for the user; and obtain an encrypted shared secret generated by a server based on at least one of the username and the computed public key, wherein the shared secret is unique and specific to the user, wherein the encrypted shared secret is indicative of a successful registration of the user at the server, and wherein the shared secret is computed based on a randomly selected server secret.

In an embodiment, the user is authenticated by transmitting via the client device an authentication request to the server; obtaining at the client device a challenge from the server; transmitting a response by the client device to the server based on the obtained challenge; and obtaining, from the server, an authentication confirmation of the user based on a comparison of the transmitted response with a reference response generated by the server.

In an embodiment, the server is authenticated by obtaining by the server a challenge and the username unique to the user from the client device; retrieving by the server an associated public key pertaining to the username and generating a response thereof; authenticating the server based on a reference response generated by the client device based on the associated public key and the generated response.

In an embodiment, in an event that the shared secret is forgotten by the user, the wherein the one or more hardware processors are configured by the instructions to transmit, from the client device, the username specific to the user; obtain a randomly generated and encrypted challenge from the server, wherein the randomly generated and encrypted challenge is based on the computed public key associated with the user; decrypt the randomly generated and encrypted challenge obtained from the server by using the selected private key associated with the user to obtain a decrypted challenge; compute a response to the decrypted challenge and transmitted to the server thereof; and obtain the encrypted shared secret from the server based on a comparison of the computed response with a reference result computed by the server.

In an embodiment, in an event that the username is forgotten by the user, the one or more hardware processors are configured by the instructions to transmit an encrypted set of parameters comprising the shared secret and the computed public key associated with the user to the server; wherein the encrypted set of parameters is based on a computed public key associated with the server; and obtain the username specific to the user based on a comparison of (i) a tuple comprising the shared secret and the computed public key being decrypted by the server, and (ii) an associated authentication database.

In an embodiment, in an event that the selected private key is forgotten by the user, the one or more hardware processors are configured by the instructions to invoke at the client device, the key-pair technique via one or more processors, for randomly selecting a new private key for the user; compute, by the client device, a new public key for the user based on the new selected private key; transmit, by the client device, an encrypted set of parameters comprising the username, the shared secret, and the new public key to the server; wherein the encrypted set of parameters is based on a computed public key associated with the server; obtain, from the server, an acknowledgement along with an encrypted shared secret, wherein the server (a) performs a comparison of (i) the shared secret being decrypted by the server, and (ii) an associated authentication database, (b) updates the public key with the new public key, and (c) outputs the encrypted shared secret based on uniqueness of a pair comprising the new public key and the shared secret.

In an embodiment, in an event that the private key is to be reset by the user, the one or more hardware processors are configured by the instructions to transmit a reset request pertaining to the private key to the server; obtain, by the client device, a randomly generated and encrypted challenge from the server in response to the reset request; decrypt, by the client device, the randomly generated and encrypted challenge by using the selected private key pertaining to the user to obtain a decrypted challenge; generate, at the client device, a response to the decrypted challenge; invoke, the key-pair technique comprised in the client device, for selection of a new private key and computing a new public key based on the new private key, wherein the step of invoking is based on a reference result computed by the server and compared with the generated response; generate, by the client device, a result based on the new private key and the new public key; transmit, by the client device, the generated result, the username, and the new public key to the server; and obtain, from the server, an acknowledgement along with an encrypted shared secret by the client device, wherein the server (i) computes a reference result and verifies with the generated result, (ii) updates the public key with the new public key, and (iii) outputs the encrypted shared secret based on uniqueness of a pair comprising the new public key and the shared secret.

In yet another aspect, there are provided one or more non-transitory machine-readable information storage mediums comprising one or more instructions which when executed by one or more hardware processors cause efficient mutual authentication of server and client by invoking at a client device, a key-pair technique, for selection of a private key for a user; computing, by using the key-pair technique, a public key based on the selected private key; selecting a username for the user; and obtaining, at the client device, an encrypted shared secret generated by a server based on at least one of the username and the computed public key, wherein the shared secret is unique and specific to the user, wherein the encrypted shared secret is indicative of a successful registration of the user at the server, and wherein the shared secret is computed based on a randomly selected server secret.

In an embodiment, the user is authenticated by transmitting via the client device an authentication request to the server; obtaining at the client device a challenge from the server; transmitting a response by the client device to the server based on the obtained challenge; and obtaining, from the server, an authentication confirmation of the user based on a comparison of the transmitted response with a reference response generated by the server.

In an embodiment, the server is authenticated by obtaining by the server a challenge and the username unique to the user from the client device; retrieving by the server an associated public key pertaining to the username and generating a response thereof; authenticating the server based on a reference response generated by the client device based on the associated public key and the generated response.

In an embodiment, in an event that the shared secret is forgotten by the user the one or more instructions which when executed by the one or more hardware processors further cause transmitting, from the client device, the username specific to the user; obtaining, by the client device, a randomly generated and encrypted challenge from the server, wherein the randomly generated and encrypted challenge is based on the computed public key associated with the user; decrypting, by the client device, the randomly generated and encrypted challenge obtained from the server by using the selected private key associated with the user to obtain a decrypted challenge; computing a response to the decrypted challenge and transmitted to the server thereof; and obtaining the encrypted shared secret from the server based on a comparison of the computed response with a reference result computed by the server.

In an embodiment, in an event that the username is forgotten by the user the one or more instructions which when executed by the one or more hardware processors further cause transmitting, by the client device, an encrypted set of parameters comprising the shared secret and the computed public key associated with the user to the server; wherein the encrypted set of parameters is based on a computed public key associated with the server; and obtaining the username specific to the user based on a comparison of (i) a tuple comprising the shared secret and the computed public key being decrypted by the server, and (ii) an associated authentication database.

In an embodiment, in an event that the selected private key is forgotten by the user the one or more instructions which when executed by the one or more hardware processors further cause invoking at the client device, the key-pair technique via one or more processors, for randomly selecting a new private key for the user; computing, by the client device, a new public key for the user based on the new selected private key; transmitting, by the client device, an encrypted set of parameters comprising the username, the shared secret, and the new public key to the server; wherein the encrypted set of parameters is based on a computed public key associated with the server; and obtaining, from the server, an acknowledgement along with an encrypted shared secret by the client device, wherein the server (a) performs a comparison of (i) the shared secret being decrypted by the server, and (ii) an associated authentication database, (b) updates the public key with the new public key, and (c) outputs the encrypted shared secret based on uniqueness of a pair comprising the new public key and the shared secret.

In an embodiment, in an event that the private key is to be reset by the user the one or more instructions which when executed by the one or more hardware processors further cause transmitting, by the client device, a reset request pertaining to the private key to the server; obtaining, by the client device, a randomly generated and encrypted challenge from the server in response to the reset request; decrypting, by the client device, the randomly generated and encrypted challenge by using the selected private key pertaining to the user to obtain a decrypted challenge; generating, at the client device, a response to the decrypted challenge; invoking, the key-pair technique comprised in the client device, for selection of a new private key and computing a new public key based on the new private key, wherein the step of invoking is based on a reference result computed by the server and compared with the generated response; generating, by the client device, a result based on the new private key and the new public key; transmitting, by the client device, the generated result, the username, and the new public key to the server; and obtaining, from the server, an acknowledgement along with an encrypted shared secret by the client device, wherein the server (i) computes a reference result and verifies with the generated result, (ii) updates the public key with the new public key, and (iii) outputs the encrypted shared secret based on uniqueness of a pair comprising the new public key and the shared secret.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system 100 (e.g., a client device) for efficient mutual authentication of a server and client (e.g., a user), in accordance with an embodiment of the present disclosure.

FIG. 2 depicts an exemplary flow chart illustrating a method for efficient mutual authentication of the server and client (e.g., the user), using the system of FIG. 1, in accordance with an embodiment of the present disclosure.

FIG. 3 depicts a sequence diagram illustrating a user registration to the server via the client device, in accordance with an embodiment of the present disclosure.

FIG. 4 depicts a sequence diagram illustrating a method of authenticating the user by the server, in accordance with an embodiment of the present disclosure.

FIG. 5 depicts a sequence diagram illustrating a method of authenticating the server by the user/client device, in accordance with an embodiment of the present disclosure.

FIG. 6 depicts a sequence diagram illustrating a method for transmitting a shared secret by the server to the client device, in the event that the shared secret is forgotten by the user, in accordance with an embodiment of the present disclosure.

FIG. 7 depicts a sequence diagram illustrating a method of transmitting the username associated with the user by the server to the client device, in the event that the username is forgotten by the user, in accordance with an embodiment of the present disclosure.

FIG. 8 depicts a sequence diagram illustrating a method of transmitting the encrypted shared secret associated with the user by the server to the client device, in the event that the private key is forgotten by the user, in accordance with an embodiment of the present disclosure.

FIG. 9 depicts a sequence diagram illustrating a method of transmitting the encrypted shared secret associated with the user by the server to the client device, in the event that the private key is reset by the user, in accordance with an embodiment of the present disclosure.

DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Current password-based authentication systems store password hashes on a server for authentication. These password hashes are prone to password guessing attacks such as dictionary attacks, credential stuffing, brute-force attacks and password spraying which can reveal the password to an attacker. This can lead to unauthorized usage of applications using the stolen password. The following are the problems associated with the existing password-based authentication methods:

1. Password Theft: Attacker can capture password while client and server communicate for authentication.
2. Brute force attack: Users often select weak passwords, making them susceptible to guess-work or cracking.
3. Replay Attacks: Capturing password while in transit and retransmit it later.
4. Password Reuse: The practice of reusing passwords across multiple accounts increases the risk of security breaches.
5. Phishing Attacks: Cybercriminals can employ phishing emails or fake websites to trick users into revealing their passwords.

Even in password-less systems, there are challenges such as:

Password-less authentication solutions, such as FIDO (Fast IDentity Online)/WebAuthN, only support some device types or use cases. Even though these (passkeys) mechanisms exist, there is an additional overhead of maintaining multiple copies of master key that is needed for resetting the passkeys. Some solutions are not only inconvenient but also insecure. If the private key is lost, the user would not be able to authenticate himself without resetting password via forgot password workflow. Resetting password is performed using a duplicate copy of his private key. Implementing password-less authentication, especially methods involving hardware tokens, may incur high additional cost.

Moreover, existing systems where authentication is performed without revealing passwords, use zero-knowledge proofs which are computationally expensive. Therefore, there is a need for efficient systems that can authenticate a user without storing password information or any other information from which password can be derived.

Embodiments of the present disclosure provide client and server architecture for authentication of a user without revealing his/her password information to a third-party identity provider. This is done by using bilinear parings to authenticate the user without sending password information to the server. This eliminates the need for storing any keys on multiple devices/third parties or storing password information on server side.

The following are (clear) benefits of the system and the method of the present disclosure in comparison to existing technology:

1. Privacy: User authentication without revealing any password information.
2. Security: Mutual authentication between the client and the server at no additional cost.
3. Usability: Ability to recover user account in case of forgetting any one of the parameters.

Following are the expressions and/or terms used by the system and method of the present disclosure:

1. **Server secret:** A server secret is a piece of data, generated by and known only to the server.
2. **Shared secret:** A shared secret is a piece of data, generated using a server secret and known only to the server and the client for which it is generated.
3. **Challenge-response authentication:** In computer security, challenge-response authentication is a family of protocols in which one party presents a question ("challenge" - usually a random value or a nonce) and another party must provide a valid answer ("response" - computed using challenge and shared secret) to be authenticated.

For the illustration, the system 100 and the method of the present disclosure implemented Bilinear pairings using the library PBC (a standard library from Stanford university). PBC is based on elliptic curves and therefore the elements are represented as coordinates on an elliptic curve, in the form (x,y).

The system and method of the present disclosure leveraged ElGamal encryption scheme for encryption and decryption of messages. In this algorithm, the encryption step generates two ciphertexts c1 and c2. c1 encapsulates the ephemeral key, while c2 conceals the original message. So, encryption of a message m denoted Enc(m) is represented using (c1_m, c2_m).

<u>**System Parameters:**</u>

```
a.param : type A pairing
q:
8780710799663312522437781984754049815806883199414208211028653399266475630880222957078625179422662221423155858769582317459277713367317481324925129998224791
h:
12016012264891146079388821366740534204802954401251311822919615131047207289359704531102844802183906537786776
r: 730750818665451621361119245571504901405976559617
exp2: 159
exp1: 107
sign1: 1
sign0: 1
g:
[22265119087225159822043778075188972035699065911735947457881767689725011044907870119524713821658573994990518321795292893945136031511828002084238892978475526,1603260695778378380205386533460656970048598919308290049646013610060699836517364554251331219321697278007089949462913815998227298210103705448319630250191568]
```

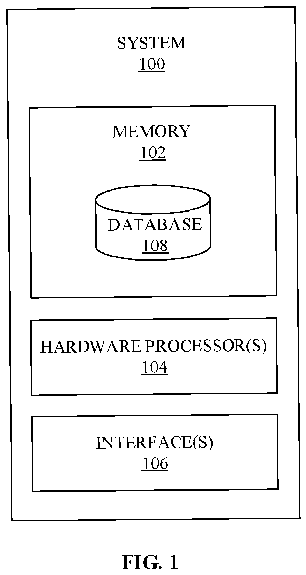

Referring now to the drawings, and more particularly to FIG. 1 through 9, where similar reference characters denote corresponding features consistently throughout the figures, there are shown preferred embodiments, and these embodiments are described in the context of the following exemplary system and/or method.

FIG. 1 depicts an exemplary system 100 for efficient mutual authentication of server and client (e.g., a user), in accordance with an embodiment of the present disclosure. The system 100 may also be referred to a client device and may be interchangeably used herein. It is to be understood by a person having ordinary skill in the art or person skilled in the art that a server as implemented herein by the present disclosure may have similar components to perform the method described herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to client device, user(s) and information transmitted to and received from the server. The database 108 further comprises various techniques such as encryption technique(s), decryption technique(s), bilinear paring techniques to enable the system 100 perform the method described herein, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

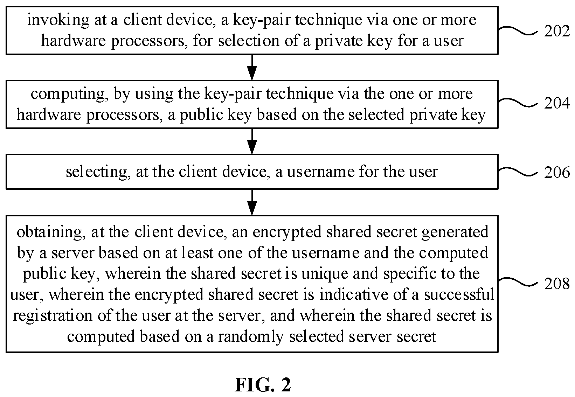

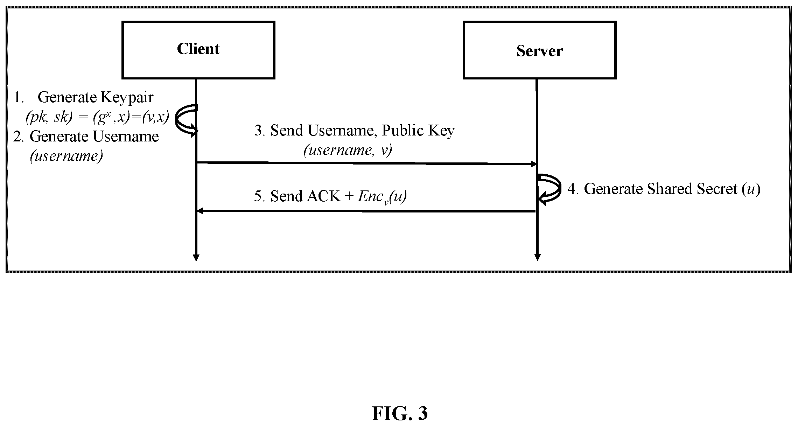

FIG. 2, with reference to FIG. 1, depicts an exemplary flow chart illustrating a method for efficient mutual authentication of the server and client (e.g., the user), using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the sequence diagrams of the system 100 depicted in FIG. 3 through 9, and the flow diagram as depicted in FIG. 2.

Prior to performing steps 202 through 208 by the system 100, there are a few configurations done at the server side. For instance, the server selects one or more groups $G$, $G_T$ of prime order $r_p$, $g$ as the generator of $G$ and further shares $g$ publicly with all the users/clients which are used by the client in respective client devices/system 100 for various scenarios (e.g., registration, authentication of user and/or server, in the event that user may or may not have forgotten at least one of username, shared secret, private key, to reset shared secret, reset private key, username, and the like, as described herein. At step 202 of the method of the present disclosure, the one or more hardware processors 104 are configured by the instructions to invoke at a client device, a key-pair technique via one or more hardware processors, for selection of a private key for a user. For instance, the key-pair technique is invoked in the client device (e.g., the system 100) for randomly selecting the private key, say $x \xleftarrow{R} \mathbb{Z}_p$ such that $0 < x < r_p$.

At step 204 of the method of the present disclosure, the one or more hardware processors 104 are configured by the instructions to compute, by using the key-pair technique, a public key based on the selected private key. For instance, the public key say is computed as $v = g^x$.

At step 206 of the method of the present disclosure, the one or more hardware processors 104 are configured by the instructions to select a username for the user. The username, say 'xyz' is selected accordingly, in one embodiment of the present disclosure. This username is transmitted via the client device (by the user) to a server. It is to be understood by a person having ordinary skill in the art or person skilled in the art that if the username already exists in a username database associated with the server, the server prompts the client device to identify a different username for the user.

At step 208 of the method of the present disclosure, the one or more hardware processors 104 are configured by the instructions to obtain, at the client device, an encrypted shared secret generated by a server based on at least one of the username u, and the computed public key *v*. The shared secret is unique and specific to the user. The encrypted shared secret is indicative of a successful registration of the user at the server. The shared secret is computed based on a randomly selected server secret. The above step 208 is better understood by way of following description:

The server selects the server secret say $y \xleftarrow{R} \mathbb{Z}_p$ such that $0 < y < r_p$ and computes a shared secret $u = g^y$ and checks if *(u, v)* is unique. Once the shared secret $u = g^y$ is computed/generated, it is then encrypted by the server based on the computed public key. The encrypted shared secret is denoted by $Enc_v(u)$ and further transmitted to the client device/user along with an acknowledgement indicating a successful registration of the user. The above steps 202 through 208 are depicted in sequence diagram illustrated in FIG. 3. More specifically, FIG. 3, with reference to FIGS. 1 through 2, depicts a sequence diagram illustrating a user registration to the server via the client device, in accordance with an embodiment of the present disclosure.

The above steps 202 through 208 may be further better understood by way of following exemplary description:

1. $x$: 5020223324008842813547505129504051194741695744 86

2. $v = g^x$

   [9278793201786851225341608295030006968413249290851481653040 4441

   8078635997423760155151740678519750371712561804656404559846 5798

   48078705889121270413927348865,

   2134214811957662684352193025520890515324584490392280294208 3494

   8386427228602343442990444462549676108223456434770746813269 9384

   95497080208756129124915860 0629]

3. **Generate Username**, say "Alice"

4. **Send Username, Public key** to server

   a. Username = "Alice "

   b. $v$:

      [9278793201786851225341608295030006968413249290851481653 0

      4044418078635997423760155151740678519750371712561804656 4

      04559846579848078705889121270413927348865,

      2134214811957662684352193025520890515324584490392280294 2

      0834948386427228602343442990444462549676108223456434770 7

      468132699384954970802087561291249158600629]

5. **Generate Shared Secret** $(u)$

   a. $y$: 43228900075395218843256501590431004311715355 1362

   b. $u = g^y$

      [8480780902184272640979244146564757485945280860835508 1851

      3739839196517798290071090218259772140715429551434735 3653

      578523124664002511733635797005927975324519,

10940291746491702442346927925402144091637717437795742707
96870202968613665390469774613116916949785908197287798851
08288109049523405322468035692571719884681 2]

6. **Send ACK,** $Enc_v(u)$

$Enc_v(u)$: $(c1\_u, c2\_u)$

$c1\_u =$

[46018221467678611289358795715697486896116589366957739870726450
00356288342029452274670596180774875206023670659384753942854163
5961569847018914303444235915 30,
80067616988367350766561733897512275548437120790513858953420455
60382400448510851695896351496911860177034537577965455702119440
45215898664725354821164305502 0]

$c2\_u =$

[69344601384863982343157690240415420171863130472858360954443338
70870304346543066918835809390907732868539888021795546199458746
385130239427868845705887581 614,
37050048308607916667407461368224081571630817614448372938713551
18634293950654089870244982216092187435389413046202829301743264
3715473069031612770489755818 59]

Upon successful registration, the following information is stored at the client device: *g, x, username, v, u* and the server stores the following information *g, y, username, v, u*. It is to be noted that $u^x = v^y = g^{xy}$.

Once the registration is completed, the next time the user logins in with the associated credentials, he/she is required to be authenticated. For authenticating the user, at first the client device transmits an authentication request to the server. This authentication request is accompanied by transmitting the username of the user to the server. In response to the authentication request, the server transmits a challenge to the client device/user. For instance, the server sends a fresh challenge z say $z \xleftarrow{R} \mathbb{Z}_p$ such that 0 < z < $r_p$.

At the client device, a response by the client device is computed and shared with the server based on the obtained challenge. For instance, the user through the client device computes the response say *resp = e(g$^z$, u$^x$)*.

The server obtains the above computed response from the client device and computes a reference response (or a reference result). For instance, the reference response is denoted as *reference resp = e(g$^z$, v$^y$)*, and verifies whether the reference response and the computed response (transmitted response) obtained from the client device match. The comparison is denoted by the following expression:

$$e(g^z, u^x) \stackrel{?}{=} e(g^z, v^y)$$

Based on the comparison of the user is authenticated and then the server transmits an authentication confirmation. In other words, the client device obtains the authentication confirmation of the user from the server based on the comparison of the transmitted response with the reference response generated by the server.

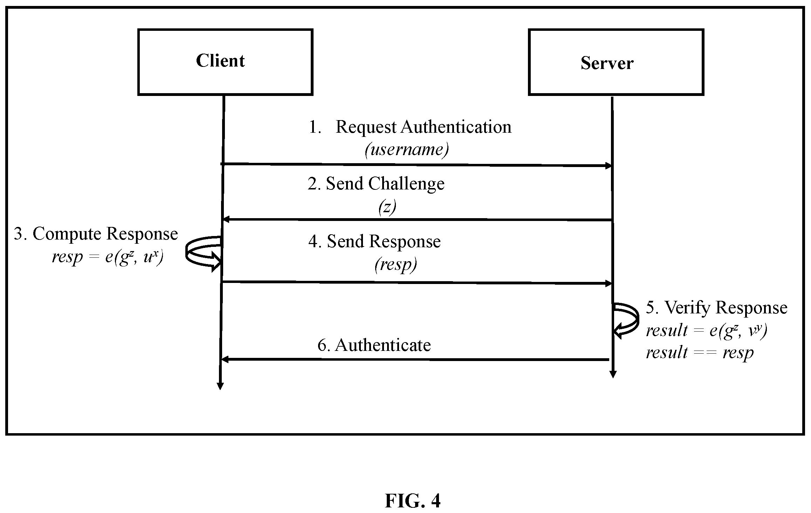

FIG. 4, with reference to FIGS. 1 through 3, depicts a sequence diagram illustrating a method of authenticating the user by the server, in accordance with an embodiment of the present disclosure. The above steps of user authentication and the sequence diagram of FIG. 4 may be further better understood by way of following exemplary description:

1. **Request Authentication**: username= "Alice"

2. **Send Challenge:**

   $z$: 4625169984241933229311842118089055156890900027561

3. **Compute Response:**

   a. $g$:

   [22265119087225159822043778075188972035699065911735947457
   88176768972501104490787011952471382165857399499051832179
   52928939451360315118280020842388929847526,

16032606957783783802053865334606569700485989193082900496 46013610060699836517364554251331219321697278007089949462 9138159982272982101037054483196302501915 68]

b. $u$:

[848078090218427264097924414656475748594528086083550818 51 3739839196517798290071090218259772140715429551434735 3653 57852312466400251173363579700592797532451 9, 1094029174649170244234692792540214409163771743779574 2707 9687020296861366539046977461311691694978590819728779 8851 08288109049523405322468035692571719884681 2]

c. $x$: 502022332400884281354750512950405119474169574486

$resp$:

[7751445396845042772214292176757315943659306683267861563443 7808 535696307825812217437708563140960050639337963835414853762 2686 3856611324855802420824950422 24, 4667096999360173821589592041020403474659100191242558706955 0117 98637514692399919302855885207746975295120294638660113792 278027 086213681309985466935700541099]

4. **Send Response** ($resp$)
5. **Verify Response**

a. $v$:

[92787932017868512253416082950300069684132492908514816 530 40444180786359974237601551517406785197503717125618046 564 04559846579848078705889121270413927348 865, 21342148119576626843521930255208905153245844903922802 942 08349483864272286023434429904444625496761082234564347 707 46813269938495497080208756129124915860062 9]

b. $y$: 4322890007539521884325650159043100431171535513 62

$result$:

[7751445396845042772214292176757315943659306683267861563443780853569630782581221743770856314096005063933739638354148537622686385661132485580242082495042224, 46670969993601738215895920410204034746591001912425587069550117986375146923999193028558852077469752951202946386601137922780270862136813099854669357005410 99]

6. **Authenticate:**

$resp == result$. Therefore, Authenticate Client/user $= 1$

The method of the present disclosure also includes authentication of the server. For authenticating the server, at first the user/client device transmits a challenge and the username unique to the user to the server. For instance, this may be similarly performed as described above where server sent the challenge to the client device/user. For the sake of brevity, say the client device/user generates and sends a fresh challenge z say $z \xleftarrow{R} \mathbb{Z}_p$ such that $0 < z < r_p$. **In** other words, the client device/user challenges the server to authenticate itself by sending username and the challenge z. The server retrieves an associated public key pertaining to the username and generates a response. For instance, the server generated response could be same as described above as *reference resp = e(g$^z$, v$^y$)*, which is then transmitted to the client device/user.

The server reference response is denoted as *reference resp = e(g$^z$, v$^y$)*, which is verified by the client device computed response for a match. The comparison is denoted by the following expression:

$$e(g^z, v^y) \stackrel{?}{=} e(g^z, u^x)$$

Based on the comparison the server is authenticated and then the user/client device transmits an authentication confirmation. In other words, the server is authenticated using the reference response generated by the client device based on the associated public key and the generated response.

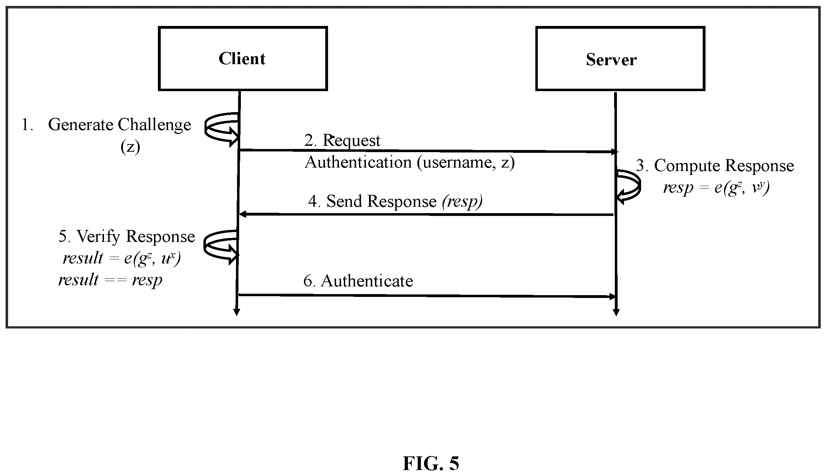

FIG. 5, with reference to FIGS. 1 through 4, depicts a sequence diagram illustrating a method of authenticating the server by the user/client device, in accordance with an embodiment of the present disclosure. The above steps of server authentication and the sequence diagram of FIG. 5 may be further better understood by way of following exemplary description:

1. **Generate challenge**:

z: 44778354277191132487957497850772363276491856 3712

2. **Request Authentication**

Sends "*Alice*", z

3. **Compute Response**

   a. $g$:

[222651190872251598220437780751889720356990659117359 47457
881767689725011044907870119524713821658573994990 51832179
529289394513603151182800208423889297847526,
160326069577837838020538653346065697004859891930 82900496
460136100606998365173645542513312193216972780 07089949462
91381599822729821010370544831963025019 1568]

   b. $v$:

[927879320178685122534160829503000696841324929085 14816530
40444180786359974237601551517406785197503717125618046564
04559846579848078705889121270413927348865,
2134214811957662684352193025520890515324584490 3922802942
08349483864272286023434429904444625496761082234 564347707
46813269938495497080208756129124915860 0629]

   c. y: 4322890007539521884325650159043100431171535 51362

*resp*:

[617626481489643033423321720089197690004883025920822586 60237799
57835813062014517637804996289845059099203235832644 04314211164

6156087237263384318084385070240,

39903624664046823078572200965795288076548247133039681059388407

54353615360980531040082383074745038152256071749341483314298651

6972592417326603004377961633389]

4. **Send Response** (*resp*)

5. **Verify Response**

    a.  *g*:

      [22265119087225159822043778075188972035699065911735947457

      88176768972501104490787011952471382165857399499051832179

      52928939451360315118280020842388929784752 6,

      16032606957783783802053865334606569700485989193082900496

      46013610060699836517364554251331219321697278007089949462

      9138159982272982101037054483196302501915 68]

    b.  *u*:

      [84807809021842726409792441465647574859452808608355081851

      37398391965177982900710902182597721407154295514347353653

      578523124664002511733635797005927975324519,

      10940291746491702442346927925402144091637717437795742707

      96870202968613665390469774613116916949785908197287798851

      082881090495234053224680356925717198846812]

    c.  *x*: 5020223324008842813547505129504051194741 69574486

*result*:

[61762648148964303342332172008919769000488302592082258660237799

57835813062014517637804996289845059099203235832624404314211164

6156087237263384318084385070240,

39903624664046823078572200965795288076548247133039681059388407

54353615360980531040082383074745038152256071749341483314298651

6972592417326603004377961633389]

6. **Authenticate:**

    *resp* $==$ *result*. Therefore, Authenticate Server $= 1$

The method and the system 100 of the present disclosure also implements a scenario where the shared secret is forgotten by the user. For instance, in an event that the shared secret is forgotten by the user, the client device transmits the username specific to the user. **In** other words, the client/user sends username to the server with a request to retrieve shared secret. **In** response to the request to retrieve shared secret the server randomly generates a challenge and encrypts it. This randomly generated challenge is encrypted by using the computed public key associated with the user. For sake of brevity, the method considered the same random challenge z. Hence, the server generates say the challenge z

say $z \xleftarrow{R} \mathbb{Z}_p$ such that $0 < z < r_p$, and encrypts it using the client's/user's computed public key to get $Enc_v(z)$ which is transmitted to the client device.

At the client device, this randomly generated and encrypted challenge $Enc_v(z)$ is decrypted by using the selected private key associated with the user to obtain a decrypted challenge. In other words, the randomly generated and encrypted challenge $Enc_v(z)$ is decrypted by using the selected private key $x$ to obtain z. Then a client response is computed to the decrypted challenge and transmitted to the server. In other words, *response resp* $= e(g^z, v)$ is the response computed at the client device which is transmitted to the server. The server then performs a comparison of the computed response with a reference result computed by the server. For instance, the server computes the reference results *response resp* $= e(g^z, v)$ and verifies with the computed response as *resp == result,* wherein the comparison is depicted below by way of expression as:

$$e(g^z, v) \overset{?}{=} e(g^z, v)$$

If there is a match, then the server sends the shared secret in an encrypted form to the client device.

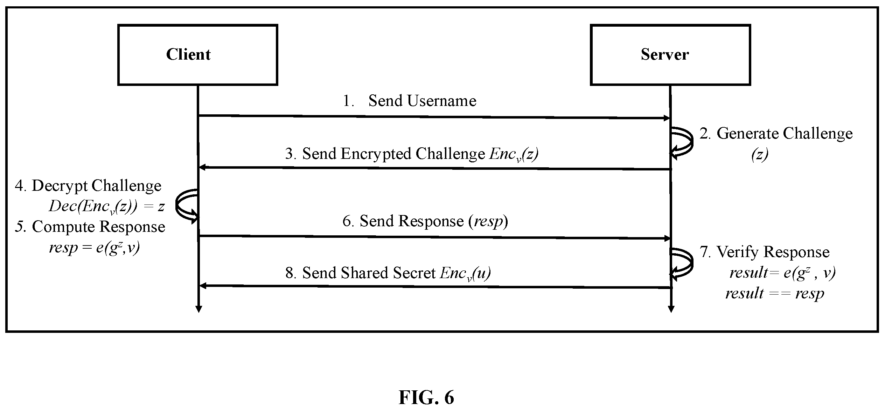

FIG. 6, with reference to FIGS. 1 through 5, depicts a sequence diagram illustrating a method for transmitting an encrypted shared secret by the server to the client device, in the event that the shared secret is forgotten by the user, in accordance with an embodiment of the present disclosure. The above steps of transmitting the encrypted shared secret by the server to the client device and the sequence diagram of FIG. 6 may be further better understood by way of following exemplary description:

1. **Send Username** "*Alice*"

2. **Generate challenge**

   z: 4625169984241933229311842118089055156890900 27561

3. **Send Encrypted Challenge**

   Enc(z): (c1_z, c2_z)

   c1_z=
   [4601822146767861128935879571569748689611658936695773 9870726450
   0035628834202945227467059618077487520602367065938475394 2854163
   59615698470189143034442359153 0,
   80067616988367350766561733897512275548437120790513858953 420455
   60382400448510851695896351496911860177034537577965455702 119440
   4521589866472535482116430550 20]

   *c2_z*=
   [68109535499877378964319475875292444145080200179072000761 956321
   71563229414718082224425622130672497106207142083449357942 161906
   8136163481236843990839378442 02,
   78896903321079562034377695123874565802096819430787667996 635232
   15470424863878560184329234346899940755355615735211642339 971548
   091495578448151822670111932123 ]

4. **Decrypt challenge**:

   z=4625169984241933229311842118089055156890900 27561

5. **Compute Response**:

a. *g*:

[2226511908722515982204377807518897203569906591173594745788176768972501104490787011952471382165857399499051832179529289394513603151182800208423889297847526, 160326069577837838020538653346065697004859891930829004964601361006069983651736455425133121932169727800708994946291381599822729821010370544831963025019156 8]

b. *v*:

[9278793201786851225341608295030006968413249290851481653040444180786359974237601551517406785197503717125618046564045598465798480787058891212704139273488 65, 2134214811957662684352193025520890515324584490392280294208349483864272286023434429904444625496761082234564347707468132699384954970802087561291249158600 629]

*resp*:

[5810506291557140819837995750193299398089600193821660845596340015152244549747295219715578801143392802143455964766294236878075450801767446035262880964594 651, 5807018836669823483775581984339254781944582474974634837176834008152850770753652610147483994572129183110127585428203750328594239808802163624833864122032 06]

6. **Send Response:** (*resp*)

7. **Verify Response**:

*result*:

[5810506291557140819837995750193299398089600193821660845596340015152244549747295219715578801143392802143455964766294236878075450801767446035262880964594 651, 5807018836669823483775581984339254781944582474974634837176834 0

08152850770753652610147483994572129183110127585428203750328594 239808802163624833864122032006]

$resp == result$. Therefore, verification is successful.

8. **Send Shared Secret**:

$Enc(u)$: $(c1\_u, c2\_u)$

$c1\_u =$

[460182214676786112893587957156974868961165893669577398707264500035628834202945227467059618077487520602367065938475394285416359615698470189143034442359153020,

800676169883673507665617338975122755484371207905138589534204556038240044851085169589635149691186017703453757796545570211944045215898664725354821164305502020]

$c2\_u =$

[69344601384863982343157690240415420171863130472858360954443338708703043465430669188358093909077328685398880217955461994587463851302394278688457058875816140,

37050048308607916667407461368224081571630817614448372938713551186342939506540898702449822160921874353894130462028293017432643715473069031612770489755818590]

**[0063]** The method and the system 100 of the present disclosure also implements a scenario where in an event that the username is forgotten by the user. For instance, in the event that the username is forgotten by the user, the client device/user transmits an encrypted set of parameters comprising the shared secret and the computed public key associated with the user to the server. The encrypted set of parameters is based on a computed public key associated with the server, in one embodiment of the present disclosure. In other words, the user transmits via the client device, the shared secret $u$ and the associated public key $v$ in an encrypted form denoted as $Enc_{pk_s}(u, v)$ to the server to retrieve the username. The server then decrypts the $Enc_{pk_s}(u, v)$ to obtain $(u, v)$. The user authenticity is then verified by the server by querying the tuple $(u, v)$ in an authentication database comprised in the server to retrieve the corresponding username, if any. On successful verification, the server transmits the username to the client device. In other words, the client device obtains the username specific to the user based on a comparison of (i) a tuple comprising the shared secret and the computed public key being decrypted by the server, and (ii) an associated authentication database.

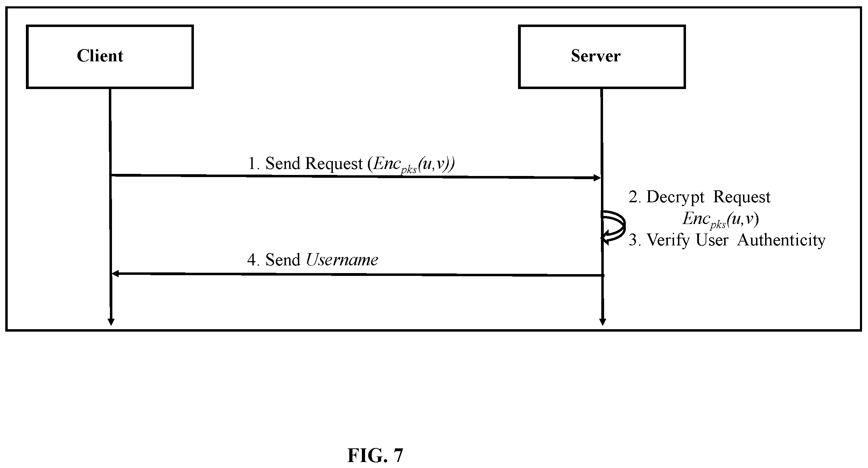

FIG. 7, with reference to FIGS. 1 through 6, depicts a sequence diagram illustrating a method of transmitting the username associated with the user by the server to the client device, in the event that the username is forgotten by the user, in accordance with an embodiment of the present disclosure. The above steps of transmitting the username associated with the user by the server to the client device and the sequence diagram of FIG. 7 may be further better understood by way of following exemplary description:

1. **Send request** $Enc_{pk_s}(u, v)$:

$u$:

[848078090218427264097924414656475748594528086083550818513739839196517798290071090218259772140715429551434735365357852312466400251173363579700592797532451 9,

1094029174649170244234692792540214409163771743779574270796870202968613665390469774613116916949785908197287798851082881090495234053224680356925717198846812]

$v$:

[9278793201786851225341608295030006968413249290851481653040444180786359974237601551517406785197503717125618046564045598465798480787058891212704139273 48865,

2134214811957662684352193025520890515324584490392280294208349483864272286023434429904444625496761082234564347707468132699384]

954970802087561291249158600629]

a. $Enc(u) = (c1\_u, c2\_u)$

$c1\_u =$

[460182214676786112893587957156974868961165893669577398707264500035628834202945227467059618077487520602367065938475394285416359615698470189143034442359153 0,

80067616988367350766561733897512275548437120790513858953420455603824004485108516958963514969118601770345375779654557021194404521589866472535482116430550 20]

$c2\_u=$

[693446013848639823431576902404154201718631304728583609544433387087030434654306691883580939090773286853988802179554619945874638513023942786884570588758161 4,

37050048308607916667407461368224081571630817614448372938713551186342939506540898702449822160921874353894130462028293017432643715473069031612770489755818 59]

b. $Enc(v) = (c1\_v, c2\_v)$

$c1\_v =$

[460182214676786112893587957156974868961165893669577398707264500035628834202945227467059618077487520602367065938475394285416359615698470189143034442359153 0,

80067616988367350766561733897512275548437120790513858953420455603824004485108516958963514969118601770345375779654557021194404521589866472535482116430550 20]

$$c2\_v =$$

[516008306041368878772658353019649038663201062906727938795469666032653098812274993550563947485598067285847432662942192522223673287264745872348483079794991 0, 488966859019134919614913568442404415776720972958768345448220814416387811090721038174308287419520435635509328002271748727950122686625922680218751560965 8392]

c. Send $Enc(u)$ and $Enc(v)$ to server

2. **Decrypt Request:**

a. Decrypt $Enc(u)$ and $Enc(v)$ to get:

i. $u$:

[848078090218427264097924414656475748594528086083550818513739839196517798290071090218259772140715429551434735365357852312466400251173363579700592797532 4519, 109402917464917024423469279254021440916377174377957427079687020296861366539046977461311691694978590819728779885108288109049523405322468035692571719884 6812]

ii. $v$:

[927879320178685122534160829503000696841324929085148165304044418078635997423760155151740678519750371712561804656404559846579848078705889121270413927348 865, 213421481195766268435219302552089051532458449039228029420834948386427228602343442990444462549676108223456434770746813269938495497080208756129124915860

0629]

3. **Verify User Authenticity:**

    a.  Server looks for the tuple (u, v) in the authentication database to retrieve the corresponding username, if any. For example, say (u,v) is mapped to username "Alice" in authentication database.

4. **Send Username** "Alice".

The method and the system 100 of the present disclosure also implements yet another scenario where in an event that the selected private key is forgotten by the user. For instance, in the event that the selected private key is forgotten by the user, the client device/user invokes the key-pair technique, for randomly selecting a new private key for the user. A new public key is then computed for the user based on the new selected private key. The selected private key is say denoted by $x' \xleftarrow{R} \mathbb{Z}_p$ such that $0 < x' < r_p$. The client device/user computes the new public key which is denoted as $v' = g^{x'}$. The client device then transmits the encrypted set of parameters comprising the username, the shared secret, and the new public key to the server. In other words, the client device/user transmits $Enc_{pk_s}$ *(username, u, v')* to the server. The encrypted set of parameters is based on a computed public key associated with the server. The $Enc_{pk_s}$ *(username, u, v')* is transmitted to the server to modify the private key. The server decrypts $Enc_{pk_s}$ *(username, u, v')* using the server's private key to get the *username, u, and v'*. The server queries the authentication database for presence of the tuple *(username, u)* to verify the authenticity. Upon successful verification, the server updates the old public key *v* with new public key *v'* and checks the uniqueness of *(u, v')*. If *(u, v')* pair already exists, the server generates new random shared secret *u'* and updates *u* to *u'* in server's database only if *(u', v')* is unique. Upon successful updation of the new keypair, the server sends ACK to client device/user. In case *u* is updated to *u'*, the server also sends $Enc_v(u')$ to the client device/user.

In other words, the client device obtains an acknowledgement along with an encrypted shared secret from the server wherein this acknowledgement is obtain after the server (a) performs a comparison of (i) the shared secret being decrypted by the server, and (ii) an associated authentication database, (b) updates the public key with the new public key, and (c) outputs the encrypted shared secret based on uniqueness of a pair comprising the new public key and the shared secret.

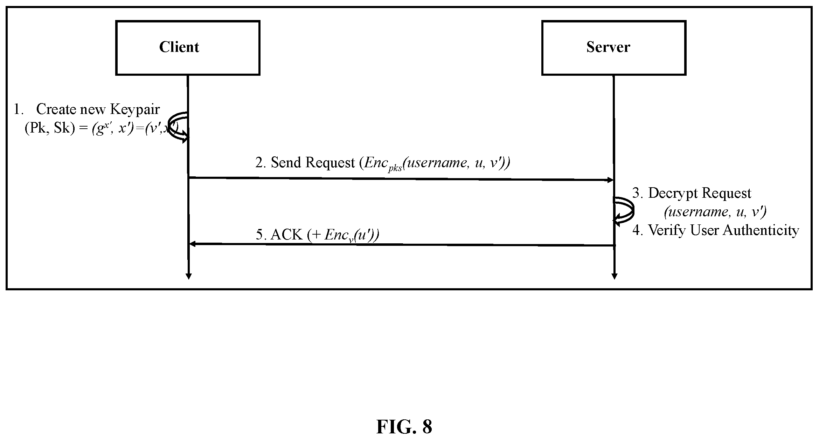

FIG. 8, with reference to FIGS. 1 through 7, depicts a sequence diagram illustrating a method of transmitting the encrypted shared secret associated with the user by the server to the client device, in the event that the private key is forgotten by the user, in accordance with an embodiment of the present disclosure. The above steps of transmitting the encrypted shared secret associated with the user by the server to the client device and the sequence diagram of FIG. 8 may be further better understood by way of following exemplary description:

1. **Create new keypair:**

    a. $x'$: 677812654024734074346794336178985356169620581575

    b. $v' = g^{x'}$

    [25762164204957602773637370807342411852785421798387181834

    975609105785216701108640937469429035079330003729599139 46

    215093705288114282283192344748507980349768,

    151259023655223038954950755120275612420664550657053516 59

    80046048460125801335244166794225872568724704915143222858

    23906719875380745559574884102536490 2297181]

2. **Send Request:** $Enc(username), Enc(u), Enc(v')$

    a. $Enc(username)$: $Enc(Alice)$

    $Username$

    [56961529262527434177408130714065504080990894241061588476

    8525516557608471677314421964670848032633387012178458 4999

    457571858459394882758768801875482859893365,

21686002921409080613840231836359104885055624377638603728 75230474707585465513679933044553679223662601906753871695 56468732491101603286756354292469395919980 5]

$Enc(username) = (c1\_username, c2\_username)$

$c1\_username =$

[46018221467678611289358795715697486896116589366957739870 72645000356288342029452274670596180774875206023670659384 75394285416359615698470189143034442359153 0,

80067616988367350766561733897512275548437120790513858953 42045560382400448510851695896351496911860177034537577965 45570211944045215898664725354821164305502 0]

$c2\_username =$

[56481899603016275631255721435059205574872903716272082433 26754858812270618378352434836749359368486824038920152788 15326933628173647599215444914795042889617 8,

80086109073469997009882889284465072367104681781560815488 35943073564550878750131957936443142375465692931796756585 33573298230188589286315869132004057827024 1]

b. $Enc(u) = (c1\_u, c2\_u)$

$u$:

[84807809021842726409792441465647574859452808608355081851 37398391965177982900710902182597721407154295514347353653 57852312466400251173363579700592797532451 9,

10940291746491702442346927925402144091637717437795742707 96870202968613665390469774613116916949785908197287798851 08288109049523405322468035692571719884681 2]

$c1\_u =$

[46018221467678611289358795715697486896116589366957739870

7264500035628834202945227467059618077487520602367065938475394285416359615698470189143034442359 1530,

800676169883673507665617338975122755484371207905138589534204556038240044851085169589635149691186 0177034537577965455702119440452158986647253548211643055020]

$c2\_u =$

[693446013848639823431576902404154201718631304728583609544433387087030434654306691883580939090773 28685398880217955461994587463851302394278688457058875816 14,

370500483086079166674074613682240815716308176144483729387135511863429395065408987024498221609218 7435389413046202829301743264371547306903161277048975581859]

$Enc(v') = (c1\_v', c2\_v')$

$v' =$

[257621642049576027736373708073424118527854217983871818349756091057852167011086409374694290350793 30003729599139462150937052881142822831923447485079803497 68,

151259023655223038954950755120275612420664550657053516598004604846012580133524416679422587256872 4704915143222858239067198753807455595748841025364902297181]

$c1\_v' =$

[460182214676786112893587957156974868961165893669577398707264500035628834202945227467059618077487 5206023670659384753942854163596156984701891430344423591 530,

800676169883673507665617338975122755484371207905138589534204556038240044851085169589635149691186 0177034537577965455702119440452158986647253548211643055020]

$c2\_v' =$

[370353759067600662666032499574813328540948579552984735278233538130571464306714280899719953303983313026969006862138060773865332404995583848044270599556863638336009854372708348897411013024075757813520866198345016168275613625277597643998135339657480014131479787374060182924896416434134693078333028730924615820 89]

3. **Decrypt request:**

   a. *Username*: "Alice"

   b. $u$:

[848078090218427264097924414656475748594528086083550818513739839196517798290071090218259772140715429551434735365357852312466400251173363579700592797532451910940291746491702442346927925402144091637717437795742707968702029686136653904697746131169169497859081972877988510828810904952340532246803569257171988468 12]

   c. $v'$:

[257621642049576027736373708073424118527854217983871818349756091057852167011086409374694290350793300037295991394621509370528811428228319234474850798034976815125902365522303895495075512027561242066455065705351659800460484601258013352441667942258725687247049151432228582390671987538074555957488410253649022971 81]

4. **Verify User Authenticity:**

Server looks for the tuple (username, u) in the authentication database to verify authenticity of the client. Upon successful verification, the server updates the old public key $v$ with the new public key $v'$ and checks the uniqueness of $(u, v')$. If $(u, v')$ pair already exists, server generates new random shared secret $u'$ and updates $u$ to $u'$ in server's database only if

$(u', v')$ is unique.

$u' =$

[321449638319445175004607198297824960175793329624288921091747093804380312733993588193112675080671079647574632090607722777212204404492914008819300152715853555,

7537522376228638368155239723382379153883242346958836436401454232495872636578758042616731126213151634656093716047429726981589930052932913015552147393739450]

$Enc(u') = (c1\_u', c2\_u')$

$c1\_u' =$

[46018221467678611289358795715697486896116589366957739870726450003562883420294522746705961807748752060236706593847539428541635961569847018914303444235915305530,

800676169883673507665617338975122755484371207905138589534204556038240044851085169589635149691186017703453757796545570211944045215898664725354821164305500020]

$c2\_u' =$

[1923752539925922807255508180654141945018543165059248529803847494319499008379364008610938399580410347623439864415098840283232699495447834644965047406668940,

54537836325514223474000440201461252106456757702938722660467978180448633627461172725732183651348916542622745089102077859258060140517301197668357600308418806]

$ACK + Enc(u')$

The method and the system 100 of the present disclosure also implements a further scenario where in an event that the private key is to be reset by the user. For instance, in the event that the private key is to be reset by the user, the client device transmits a reset request pertaining to the private key to the server. In other words, the reset request also comprises the username of the user. The server then generates a random challenge say $z$, $z \xleftarrow{R} \mathbb{Z}_p$ such that $0 < z < r_p$, and then encrypts z to obtain $Enc_v(z)$. This randomly generated and encrypted challenge $Enc_v(z)$ is obtained at the client device wherein the $Enc_v(z)$ is decrypted by the client device by using the selected private key pertaining to the user to obtain a decrypted challenge and a response is generated accordingly. **In** other words, the client device/user decrypts the challenge to obtain z and an appropriate response is generated/computed at the client device which is denoted by $e(g^z, u^x)$. This response is then transmitted to the server, wherein the server computes a reference result $e(g^z, v^y)$ which is compared with the client device response $e(g^z, u^x)$ for verification *resp == result.* This verification is performed by way of following expression:

$$e(g^z, u^x) \overset{?}{=} e(g^z, v^y).$$

Based on the successful verification, the client device invokes the key-pair technique for selection of a new private key and computes a new public key based on the new private key. The step of invoking is based on a reference result computed by the server and compared with the generated response as mentioned above. A result is then generated at the client device based on the new private key and the new public key. For instance, say the new private key is $x' \xleftarrow{R} \mathbb{Z}_p$ such that $0 < x' < r_p$. The client device/user computes the new public key $v'$ as $v' = g^{x'}$ based on which a result is generated and expressed as $result_c = e(g^z, u^{x'})$. This generated result by the client device is then transmitted along with the username, and the new public key to the server. In other words, $result_c$, *username*, and $v'$ are transmitted to the server. The server then computes a reference result $result_s = e(g^z, (v')^y)$ for verifying $result_c = result_s$. Upon successful verification, the server (ii) updates the public key $v$ with the new public key $v'$, and (iii) outputs the encrypted shared secret $u'$ based on uniqueness of a pair comprising the new public key $v'$ and the shared secret $u'$. In other words, upon successful verification, the server updates the old public key $v$ with new public key $v'$ and checks the uniqueness of *(u, v')*. If *(u, v')* pair already exists, the server generates new random shared secret $u'$ and updates $u$ to $u'$ in authentication database if $(u', v')$ is unique. Thus, the client device obtains an acknowledgement along with an encrypted shared secret (e.g., ACK, $Enc_{v'}(u')$) from the server.

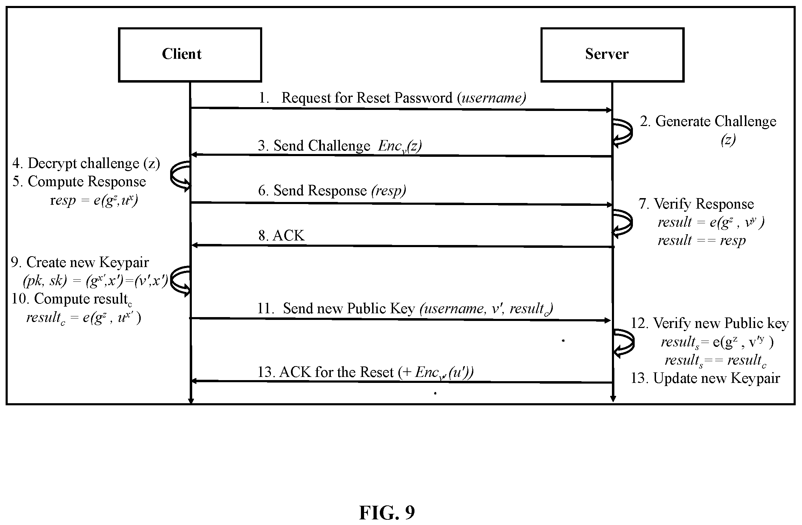

FIG. 9, with reference to FIGS. 1 through 8, depicts a sequence diagram illustrating a method of transmitting the encrypted shared secret associated with the user by the server to the client device, in the event that the private key is reset by the user, in accordance with an embodiment of the present disclosure. The above steps of transmitting the shared secret associated with the user by the server and the sequence diagram of FIG. 9 may be further better understood by way of following exemplary description:

1. **Request for Reset Password** "Alice".

2. **Generate Challenge**

   $z$: 4625169984241933229311842118089055156890900027561

$$Enc(z) = (c1\_z, c2\_z)$$

   $c1\_z =$

   [46018221467678611289358795715697486896116589366957739870726450
   00356288342029452274670596180774875206023670659384753942854163
   596156984701891430344423591530,

   80067616988367350766561733897512275548437120790513858953420455
   60382400448510851695896351496911860177034537577965455702119440
   45215898664725354821164305502Ø]

   $c2\_z =$

   [68109535499877378964319475875292444145080200179072000761956321
   71563229414718082224425622130672497106207142083449357942161906
   813616348123684399083937844202,

   78896903321079562034377695123874565802096819430787667996635232

15470424863878560184329234346899940755355615735211642339971548 09149557844815182267011932123]

3. **Send Challenge** ($c1\_z, c2\_z$)

4. **Decrypt Challenge**

$z$: 462516998424193322931184211808905515689090027561

5. **Compute Response**

   a. $g$:

   [22265119087225159822043778075188972035699065911735947457 88176768972501104490787011952471382165857399499051832179 529289394513603151182800208423889297847526,
   16032606957783783802053865334606569700485989193082900496 46013610060699836517364554251331219321697278007089949462 913815998227298210103705448319630250191568]

   b. $u$:

   [84807809021842726409792441465647574859452808608355081851 37398391965177982900710902182597721407154295514347353653 578523124664002511733635797005927975324519,
   10940291746491702442346927925402144091637717437795742707 96870202968613665390469774613116916949785908197287798851 082881090495234053224680356925717198846812]

   c. $x$: 502022332400884281354750512950405119474169574486

   $resp$:

   [77514453968450427722142921767573159436593066832678615634437808 53569630782581221743770856314096005063933739638354148537622686 385661132485580242082495042224,
   46670969993601738215895920410204034746591001912425587069550117 98637514692399919302855885207746975295120294638660113792278027 086213681309985466935700541099]

6. **Send Response:** (*resp*)

7. **Verify Response**

    a. $v$:

        [927879320178685122534160829503000696841324929085148165304044418078635997423760155151740678519750371712561804656404559846579848078705889121270413927348865,

        2134214811957662684352193025520890515324584490392280294208349483864272286023434429904444625496761082234564347707468132699384954970802087561291249158600629]

    b. $y$: 432289000753952188432565015904310043117153551362

*result*:

[7751445396845042772214292176757315943659306683267861563443780853569630782581221743770856314096005063933739638354148537622686385661132485580242082495042224,

4667096999360173821589592041020403474659100191242558706955011798637514692399919302855885207746975295120294638660113792278027086213681309985466935700541099]

8. **ACK**

9. **Create new Keypair**:

    a. $x'$: 677812654024734074346794336178985356169620581575

    b. $v' = g^{x'}$

        [2576216420495760277363737080734241185278542179838718183497560910578521670110864093746942903507933000372959913946215093705288114282283192344748507980349768,

        1512590236552230389549507551202756124206645506570535165980046048460125801335244166794225872568724704915143222858239067198753807455595748841025364902297181]

10. **Compute** $result_c$:

$result_c =$

[3193845946259242685891955608051974453917848880257968461936153340996310558714047710385297375541893257867231308727858565544017767711657278376073973580312920,

307038692041801877365880778440086301609366683500330656105878692566004084159464763130484469850021737483902550054166861150314547244701687631782947136532324 8]

11. **Send new Public Key:**

   a. *Username = Alice*

   b. $v'$:

    [25762164204957602773637370807342411852785421798387181834975609105785216701108640937469429035079330003729599139462150937052881142822831923447485079803497 68,

    15125902365522303895495075512027561242066455065705351659800460484601258013352441667942258725687247049151432228582390671987538074555957488410253649022 97181]

   c. $result_c$:

    [3193845946259242685891955608051974453917848880257968461936153340996310558714047710385297375541893257867231308727858565544017767711657278376073973580312 920,

    30703869204180187736588077844008630160936668350033065610587869256600408415946476313048446985002173748390255005416686115031454724470168763178294713653232 48]

12. **Verify new Public key**

$result_s =$

[3193845946259242685891955608051974453917848880257968461936153340996310558714047710385297375541893257867231308727858565544017

76771165727837607397358031292O,

307O386920418018773658807784400863O1609366683500330656105878369

2566004084159464763130484469850021737483902550054166861150314

4724470168763178294713653232248]

Verified as $result_c == result_s$

13. **Update new Keypair:**

Server updates the old public key v with new public key $v'$ and checks the uniqueness of $(u, v')$. If $(u, v')$ pair already exists, server generates new random shared secret $u'$ and updates $u$ to $u'$ in server's database only if $(u', v')$ is unique.

14. **ACK for the Reset**

$Enc(u') = (c1\_u', c2\_u')$

$c1\_u' =$

[4601822146767861128935879571569748689611658936695773987072645O

003562883420294522746705961807748752060236706593847539428541633

59615698470189143O344423591530,

8006761698836735076656173389751227554843712079O5138589534204555

6O382400448510851695896351496911860177O345375779654557O2119440

45215898664725354821164305502O]

$c2\_u' =$

[192375253992592280725550818065414194501854316505924852980384744

9431949900837936400861O938399580410347623439864415O9884028323233

69949544783464496504740666894O,

5453783632551422347400044020146125210645675770293872266O4679788

18O4486336274611727257321836513489165426227450891O20778592580633

01405173O119766835760030841806].

Bilinear pairings have been used in literature for authentication, however existing systems store hash of password on server side, which can potentially lead to brute force attack on password hash and retrieval of password. However, in the system of the present disclosure, the method completely avoids transmission of password or other information from which password can be derived to the server thus achieving a non-trivial application of the bilinear pairings. Further, the system and method effectively work even in untrusted environments. For instance, despite most messages exchanged between client and server being unencrypted, the scheme remains secure (because of the hardness of DLP). It is to be noted that client and server authentication happen completely using unencrypted messages. This system and method of the present disclosure is efficient since the present disclosure and its systems use low computational resources. Furthermore, flexible password-based authentication systems not requiring transmission of passwords such as those based on state-of-the art zero knowledge proofs are computationally intensive. In comparison, the method of the present disclosure is computationally efficient and can be easily implemented using state-of-the art pairing based cryptographic libraries with minimal effort. The system and method of the present disclosure provide balanced security, privacy, usability, and the like. For instance, password-less authentication systems such as FIDO2/-WebAuthn suffer from device dependence and difficulty of account retrieval. However, the method of the present disclosure provides a lot of user flexibility by providing efficient fallback mechanisms. Moreover, the present disclosure enables mutual authentication of the server and the client/user without revealing password. For instance, existing client server mutual authentication protocols are certificate-based. These protocols rely on third-party certificate authorities (CAs) for certificate issuance. Moreover, there is a risk posed by certificate revocations to reflect throughout the system. The present disclosure enables client/user and server to authenticate to one another without ever having to communicate their respective secrets. It is to be understood by a person having ordinary skill in the art or person skilled in the art that techniques implemented by the system 100 and the method described herein such as Elliptic curve based bilinear pairings, and ElGamal encryption scheme for encryption and pair generation shall not be construed as limiting the scope of the present disclosure. The present disclosure and the system and method described herein provide the following advantages:

1. Password is not transmitted to the server during authentication phase, hence no scope of password theft/security vulnerabilities/replay attacks during transit.
2. Username and public key (a function of password, but not the actual password) are only transmitted once during registration or setup phase
3. User does not need to remember the password. to the server.
4. The system's architecture does not rely on a physical device binding for authentication. Hence, more user friendly even in case of loss/device theft. This does not necessitate specialized hardware or software, making it a cost-effective choice for businesses.

The system 100 and the method of the present disclosure may be implemented in any domain, for example, in Internet of Things (IoT) device mutual authentication with the server without revealing sensitive information such as keys of unique identifiers. Other practical applications include, but are not limited to, implementing for application programming interface (API) authentication where API service must confirm its authentication with the client application and the client (e.g., user) has to authenticate itself to an API, or mutual authentication in 5G or new generation technologies, and the like. It is to be understood by a person having ordinary skill in the art or person skilled in the art that the above-mentioned practical applications shall not be construed as limiting the scope of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

   invoking, (202) at a client device, a key-pair technique via one or more hardware processors, for selection of a private key for a user;
   computing (204), by using the key-pair technique via the one or more hardware processors, a public key based on the selected private key;
   selecting (206), at the client device, a username for the user; and
   obtaining (208), at the client device, an encrypted shared secret generated by a server based on at least one of the username and the computed public key, wherein the shared secret is unique and specific to the user, wherein the encrypted shared secret is indicative of a successful registration of the user at the server, and wherein the shared secret is computed based on a randomly selected server secret.

2. The processor implemented method as claimed in claim 1, further comprising:

   transmitting via the client device an authentication request to the server;
   obtaining at the client device a challenge from the server;
   transmitting a response by the client device to the server based on the obtained challenge; and
   obtaining, from the server, an authentication confirmation of the user based on a comparison of the transmitted response with a reference response generated by the server.

3. The processor implemented method as claimed in claim 1, wherein the server is authenticated by:

   obtaining by the server a challenge and the username unique to the user from the client device;
   retrieving by the server an associated public key pertaining to the username and generating a response thereof; and
   authenticating the server based on a reference response generated by the client device based on the associated public key and the generated response.

4. The processor implemented method as claimed in claim 1, further comprising in an event that the shared secret is forgotten by the user:

   transmitting, from the client device, the username specific to the user to the server;
   obtaining, by the client device, a randomly generated and encrypted challenge from the server, wherein the randomly generated and encrypted challenge is based on the computed public key associated with the user;
   decrypting, by the client device, the randomly generated and encrypted challenge obtained from the server by using the selected private key associated with the user to obtain a decrypted challenge;

computing a response to the decrypted challenge and transmitted to the server thereof; and

obtaining the encrypted shared secret from the server based on a comparison of the computed response with a reference result computed by the server.

5. The processor implemented method as claimed in claim 1, further comprising in an event that the username is forgotten by the user:

transmitting, by the client device, an encrypted set of parameters comprising the shared secret and the computed public key associated with the user to the server; wherein the encrypted set of parameters is based on a computed public key associated with the server; and

obtaining the username specific to the user based on a comparison of (i) a tuple comprising the shared secret and the computed public key being decrypted by the server, and (ii) an associated authentication database.

6. The processor implemented method as claimed in claim 1, further comprising:
in an event that the selected private key is forgotten by the user:

invoking at the client device, the key-pair technique, for randomly selecting a new private key for the user;

computing, by the client device, a new public key for the user based on the new selected private key;

transmitting, by the client device, an encrypted set of parameters comprising the username, the shared secret, and the new public key to the server; wherein the encrypted set of parameters is based on a computed public key associated with the server; and

obtaining, from the server, an acknowledgement along with an encrypted shared secret by the client device, wherein the server (a) performs a comparison of (i) the shared secret being decrypted by the server, and (ii) an associated authentication database, (b) updates the public key with the new public key, and (c) outputs the encrypted shared secret based on uniqueness of a pair comprising the new public key and the shared secret.

7. The processor implemented method as claimed in claim 1, further comprising:
in an event that the private key is to be reset by the user:

transmitting, by the client device, a reset request pertaining to the private key to the server;

obtaining, by the client device, a randomly generated and encrypted challenge from the server in response to the reset request;

decrypting, by the client device, the randomly generated and encrypted challenge by using the selected private key pertaining to the user to obtain a decrypted challenge;

generating, at the client device, a response to the decrypted challenge;

invoking, the key-pair technique comprised in the client device, for selection of a new private key and computing a new public key based on the new private key, wherein the step of invoking is based on a reference result computed by the server and compared with the generated response;

generating, by the client device, a result based on the new private key and the new public key;

transmitting, by the client device, the generated result, the username, and the new public key to the server; and

obtaining, from the server, an acknowledgement along with an encrypted shared secret by the client device, wherein the server (i) computes a reference result and verifies with the generated result, (ii) updates the public key with the new public key, and (iii) outputs the encrypted shared secret based on uniqueness of a pair comprising the new public key and the shared secret.

8. A client device (100), comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

invoke a key-pair technique for selection of a private key for a user;

compute, by using the key-pair technique, a public key based on the selected private key;

select a username for the user; and

obtain an encrypted shared secret generated by a server based on at least one of the username and the computed public key, wherein the shared secret is unique and specific to the user, wherein the encrypted shared secret is indicative of a successful registration of the user at the server, and wherein the shared secret is computed based on a randomly selected server secret.

9. The client device as claimed in claim 8, wherein:
the user is authenticated by:

transmitting via the client device an authentication request to the server;
obtaining at the client device a challenge from the server;
transmitting a response by the client device to the server based on the obtained challenge; and
obtaining, from the server, an authentication confirmation of the user based on a comparison of the transmitted response with a reference response generated by the server,
and wherein the server is authenticated by:

obtaining by the server a challenge and the username unique to the user from the client device;
retrieving by the server an associated public key pertaining to the username and generating a response thereof; and
authenticating the server based on a reference response generated by the client device based on the associated public key and the generated response.

10. The client device as claimed in claim 8, wherein:

in an event that the shared secret is forgotten by the user, the client device is further configured by the instructions to:

transmit the username specific to the user to the server;
obtain a randomly generated and encrypted challenge from the server,

wherein the randomly generated and encrypted challenge is based on the computed public key associated with the user;

decrypt the randomly generated and encrypted challenge obtained from the server by using the selected private key associated with the user to obtain a decrypted challenge;
compute a response to the decrypted challenge and transmitted to the server thereof; and
obtain the encrypted shared secret from the server based on a comparison of the computed response with a reference result computed by the server, and

wherein in an event that the username is forgotten by the user, the client device is further configured by the instructions to:
transmit an encrypted set of parameters comprising the shared secret and the computed public key associated with the user to the server; wherein the encrypted set of parameters is based on a computed public key associated with the server; and obtain the username specific to the user based on a comparison of (i) a tuple comprising the shared secret and the computed public key being decrypted by the server, and (ii) an associated authentication database,
and wherein in an event that the selected private key is forgotten by the user, the client device is further configured by the instructions to:

invoke the key-pair technique, for randomly selecting a new private key for the user;
compute a new public key for the user based on the new selected private key;
transmit an encrypted set of parameters comprising the username, the shared secret, and the new public key to the server; wherein the encrypted set of parameters is based on a computed public key associated with the server; and
obtain, from the server, an acknowledgement along with an encrypted shared secret, wherein the server (a) performs a comparison of (i) the shared secret being decrypted by the server, and (ii) an associated authentication database, (b) updates the public key with the new public key, and (c) outputs the encrypted shared secret based on uniqueness of a pair comprising the new public key and the shared secret.

11. The client device as claimed in claim 8, wherein in an event that the private key is to be reset by the user, the client device is further configured by the instructions to:

transmit a reset request pertaining to the private key to the server;

obtain a randomly generated and encrypted challenge from the server in response to the reset request;

decrypt the randomly generated and encrypted challenge by using the selected private key pertaining to the user to obtain a decrypted challenge;

generate a response to the decrypted challenge;

invoke, the key-pair technique, for selection of a new private key and computing a new public key based on the new private key, wherein the step of invoking is based on a reference result computed by the server and compared with the generated response;

generate a result based on the new private key and the new public key;

transmit the generated result, the username, and the new public key to the server; and

obtain, from the server, an acknowledgement along with an encrypted shared secret by the client device, wherein the server (i) computes a reference result and verifies with the generated result, (ii) updates the public key with the new public key, and (iii) outputs the encrypted shared secret based on uniqueness of a pair comprising the new public key and the shared secret.

12. One or more non-transitory machine-readable information storage mediums comprising one or more instructions which when executed by one or more hardware processors cause:

invoking, at a client device, a key-pair technique for selection of a private key for a user;

computing , by using the key-pair technique, a public key based on the selected private key;

selecting , at the client device, a username for the user; and

obtaining , at the client device, an encrypted shared secret generated by a server based on at least one of the username and the computed public key, wherein the shared secret is unique and specific to the user, wherein the encrypted shared secret is indicative of a successful registration of the user at the server, and wherein the shared secret is computed based on a randomly selected server secret.

13. The one or more non-transitory machine-readable information storage mediums as claimed in claim 12, wherein the one or more instructions which when executed by the one or more hardware processors further cause:

transmitting via the client device an authentication request to the server;

obtaining at the client device a challenge from the server;

transmitting a response by the client device to the server based on the obtained challenge; and

obtaining, from the server, an authentication confirmation of the user based on a comparison of the transmitted response with a reference response generated by the server.

14. The one or more non-transitory machine-readable information storage mediums as claimed in claim 12, wherein: the user is authenticated by:

transmitting via the client device an authentication request to the server;

obtaining at the client device a challenge from the server;

transmitting a response by the client device to the server based on the obtained challenge; and

obtaining, from the server, an authentication confirmation of the user based on a comparison of the transmitted response with a reference response generated by the server, and

wherein the server is authenticated by:

obtaining by the server a challenge and the username unique to the user from the client device;

retrieving by the server an associated public key pertaining to the username and generating a response thereof; and

authenticating the server based on a reference response generated by the client device based on the associated public key and the generated response.

15. The one or more non-transitory machine-readable information storage mediums as claimed in claim 12, wherein: in an event that the shared secret is forgotten by the user, the client device is further configured by the instructions to:

transmit the username specific to the user to the server;

obtain a randomly generated and encrypted challenge from the server, wherein the randomly generated and encrypted challenge is based on the computed public key associated with the user;

decrypt the randomly generated and encrypted challenge obtained from the server by using the selected private key associated with the user to obtain a decrypted challenge;

compute a response to the decrypted challenge and transmitted to the server thereof; and

obtain the encrypted shared secret from the server based on a comparison of the computed response with a reference result computed by the server,

wherein in an event that the username is forgotten by the user, the client device is further configured by the instructions to:

transmit an encrypted set of parameters comprising the shared secret and the computed public key associated with the user to the server; wherein the encrypted set of parameters is based on a computed public key associated with the server; and

obtain the username specific to the user based on a comparison of (i) a tuple comprising the shared secret and the computed public key being decrypted by the server, and (ii) an associated authentication database,

wherein in an event that the selected private key is forgotten by the user, the client device is further configured by the instructions to:

invoke the key-pair technique, for randomly selecting a new private key for the user;

compute a new public key for the user based on the new selected private key;

transmit an encrypted set of parameters comprising the username, the shared secret, and the new public key to the server; wherein the encrypted set of parameters is based on a computed public key associated with the server; and

obtain, from the server, an acknowledgement along with an encrypted shared secret, wherein the server (a) performs a comparison of (i) the shared secret being decrypted by the server, and (ii) an associated authentication database, (b) updates the public key with the new public key, and (c) outputs the encrypted shared secret based on uniqueness of a pair comprising the new public key and the shared secret,

wherein in an event that the private key is to be reset by the user, the client device is further configured by the instructions to:

transmit a reset request pertaining to the private key to the server;

obtain a randomly generated and encrypted challenge from the server in response to the reset request;

decrypt the randomly generated and encrypted challenge by using the selected private key pertaining to the user to obtain a decrypted challenge;

generate a response to the decrypted challenge;

invoke, the key-pair technique, for selection of a new private key and computing a new public key based on the new private key, wherein the step of invoking is based on a reference result computed by the server and compared with the generated response;

generate a result based on the new private key and the new public key;

transmit the generated result, the username, and the new public key to the server; and

obtain, from the server, an acknowledgement along with an encrypted shared secret by the client device, wherein the server (i) computes a reference result and verifies with the generated result, (ii) updates the public key with the new public key, and (iii) outputs the encrypted shared secret based on uniqueness of a pair comprising the new public key and the shared secret.

SYSTEM
100

MEMORY
102

DATABASE
108

HARDWARE PROCESSOR(S)
104

INTERFACE(S)
106

**FIG. 1**

invoking at a client device, a key-pair technique via one or more hardware processors, for selection of a private key for a user ⌒ 202

computing, by using the key-pair technique via the one or more hardware processors, a public key based on the selected private key ⌒ 204

selecting, at the client device, a username for the user ⌒ 206

obtaining, at the client device, an encrypted shared secret generated by a server based on at least one of the username and the computed public key, wherein the shared secret is unique and specific to the user, wherein the encrypted shared secret is indicative of a successful registration of the user at the server, and wherein the shared secret is computed based on a randomly selected server secret ⌒ 208

**FIG. 2**

1. Generate Keypair
$(pk, sk) = (g^x, x) = (v, x)$
2. Generate Username
*(username)*

3. Send Username, Public Key
*(username, v)*

4. Generate Shared Secret $(u)$

5. Send ACK + $Enc_v(u)$

Client

Server

**FIG. 3**

**FIG. 4**

FIG. 5

EP 4 679 766 A1

FIG. 6

**FIG. 7**

**FIG. 8**

Client | Server

1. Request for Reset Password *(username)*

2. Generate Challenge
   *(z)*

3. Send Challenge $Enc_v(z)$

4. Decrypt challenge (z)
5. Compute Response
   $resp = e(g^z, u^x)$

6. Send Response *(resp)*

7. Verify Response
   $result = e(g^z, v^y)$
   $result == resp$

8. ACK

9. Create new Keypair
   $(pk, sk) = (g^{x'}, x') = (v', x')$
10. Compute $result_c$
    $result_c = e(g^z, u^{x'})$

11. Send new Public Key *(username, v', $result_c$)*

12. Verify new Public key
    $result_s = e(g^z, v'^y)$
    $result_s == result_c$

13. ACK for the Reset $(+ Enc_{v'}(u'))$

13. Update new Keypair

**FIG. 9**

Europäisches
Patentamt

European
Patent Office

Office européen
des brevets

# EUROPEAN SEARCH REPORT

**Application Number**

EP 25 18 4343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/013928 A1 (VISA INT SERVICE ASS [US]) 16 January 2020 (2020-01-16)<br>* paragraph [0034] - paragraph [0047] *<br>* paragraph [0053] - paragraph [0088] *<br>* figures 1-4 * | 1-15 | INV.<br>H04L9/08<br>H04L9/32 |
| X | US 8 719 952 B1 (DAMM-GOOSSENS ANDRE [US]) 6 May 2014 (2014-05-06)<br>* column 7, line 22 - column 9, line 23 *<br>* column 11, line 64 - column 17, line 35 * | 1-15 | |
| A | WO 2017/004466 A1 (VISA INT SERVICE ASS [US]) 5 January 2017 (2017-01-05)<br>* paragraph [0040] - paragraph [0048] *<br>* paragraph [0074] - paragraph [0106] * | 1-15 | |

|  | TECHNICAL FIELDS SEARCHED (IPC) |
|---|---|
|  | H04L |

The present search report has been drawn up for all claims

| Place of search | Date of completion of the search | Examiner |
|---|---|---|
| Munich | 24 November 2025 | Apostolescu, Radu |

EPO FORM 1503 03.82 (P04C01)

## ANNEX TO THE EUROPEAN SEARCH REPORT
## ON EUROPEAN PATENT APPLICATION NO.

EP 25 18 4343

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2025

| Patent document cited in search report | | | Publication date | Patent family member(s) | | Publication date |
|---|---|---|---|---|---|---|
| WO 2020013928 | A1 | | 16-01-2020 | CN | 112425118 A | 26-02-2021 |
| | | | | EP | 3821565 A1 | 19-05-2021 |
| | | | | SG | 11202100166Y A | 25-02-2021 |
| | | | | US | 2020021448 A1 | 16-01-2020 |
| | | | | WO | 2020013928 A1 | 16-01-2020 |
| US 8719952 | B1 | | 06-05-2014 | NONE | | |
| WO 2017004466 | A1 | | 05-01-2017 | AU | 2016287728 A1 | 07-12-2017 |
| | | | | AU | 2016287732 A1 | 07-12-2017 |
| | | | | CA | 2990651 A1 | 05-01-2017 |
| | | | | CA | 2990656 A1 | 05-01-2017 |
| | | | | CN | 107810617 A | 16-03-2018 |
| | | | | CN | 107852404 A | 27-03-2018 |
| | | | | CN | 113630416 A | 09-11-2021 |
| | | | | EP | 3318003 A1 | 09-05-2018 |
| | | | | EP | 3318043 A1 | 09-05-2018 |
| | | | | EP | 3349393 A1 | 18-07-2018 |
| | | | | EP | 4016920 A1 | 22-06-2022 |
| | | | | RU | 2018103181 A | 31-07-2019 |
| | | | | RU | 2018103183 A | 31-07-2019 |
| | | | | US | 2018167208 A1 | 14-06-2018 |
| | | | | US | 2018205561 A1 | 19-07-2018 |
| | | | | US | 2020295952 A1 | 17-09-2020 |
| | | | | US | 2021058259 A1 | 25-02-2021 |
| | | | | US | 2022224551 A1 | 14-07-2022 |
| | | | | US | 2024007308 A1 | 04-01-2024 |
| | | | | WO | 2017004466 A1 | 05-01-2017 |
| | | | | WO | 2017004470 A1 | 05-01-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421052518